## Europäisches Patentamt

## European Patent Office

## Office européen des brevets

(11) Veröffentlichungsnummer: **0 042 453**

**A1**

(12) ## EUROPÄISCHE PATENTANMELDUNG

(21) Anmeldenummer: **80103564.3**

(22) Anmeldetag: **24.06.80**

(51) Int. Cl.³: **F 03 B 17/00**
**F 03 G 3/00**

(43) Veröffentlichungstag der Anmeldung:
**30.12.81** Patentblatt **81/52**

(84) Benannte Vertragsstaaten:
**AT BE CH FR GB IT LI LU NL SE**

(71) Anmelder: **Pröschel, Erich**
**Kirchfeldstrasse 85**
**D-4000 Düsseldorf(DE)**

(72) Erfinder: **Pröschel, Erich**
**Kirchfeldstrasse 85**
**D-4000 Düsseldorf(DE)**

(54) **Gravitationskräftemotor.**

(57) Die Erfindung bezieht sich auf eine Kraft- und Arbeitsmaschine, die unter Verwendung einer strömenden Gewichtsmasse, die Gravitationskräfte für ihren Antrieb erschließt.

Durch die Erfindung wird auf relativ einfache Weise die unveränderliche Energiequelle Gravitation nutzbar gemacht, und ein von Energieträgern unabhängiger Antriebsmotor vorgeschlagen.

Das Wesen der Erfindung besteht darin, daß ein Rotationskörper die Form eines zylindrischen Hohlkörpers 10 hat und mindestens zwei von innen nach außen spiralförmig um die Drehachse verlaufende Kanäle 16;17 aufweist und daß die strömende Gewichtsmasse während der Rotation die Kanäle 16; 17 von innen nach außen kontinuierlich durchströmt, wobei an den Kanalausgängen jeweils eine Düse 18; 19 angeordnet ist.

FIG.3

- 1 -

P r ö s c h e l , Erich
in 4000 Düsseldorf

Gravitationskräftemotor

Die Erfindung betrifft einen Gravitationskräftemotor mit einem Rotationskörper, der unter
Verwendung einer strömenden Gewichtsmasse auf
krummliniger Bewegungs- und Strömungsrichtung die
Gravitationskräfte zu einer nutzbaren mechanischen
Energie erschließt, insbesondere zur Verwendung als
Kraft- und Arbeitsmaschine.

Der Gravitationskräftemotor soll dazu beitragen,
den Energiebedarf zu sichern und dafür andere Rohstoffe verschiedenster Art, die sonst zur Erzeugung
von Energie verwendet werden müssen, zu sparen und
für andere Verwendungen zu erhalten.

Ein Gravitationskräftemotor oder ein System,
dessen erzeugte Energie sich aus einer nicht zuvorbereitgestellten Energiequelle ableitet, ist nicht
bekannt.

Bei der Freistrahlturbine (Peltonräder) wird
die ebenfalls durch Gravitationskräfte bedingte
potentielle Energie ausgenutzt und in mechanische
Energie umgesetzt. Es bleibt jedoch bei der Freistrahlturbine die der halben Strahlgeschwindigkeit

- 2 -

entsprechende potentielle Energie ungenutzt, weil
die Turbine mit einer der halben Strahlgeschwindigkeit entsprechenden Umfangsgeschwindigkeit in
Strahlrichtung dreht. Die Gewichtsmasse Wasser
kann also nur mit halber Strahlgeschwindigkeit einen
Strahlstoß ausüben, durch den ein Drehmoment erzeugt
wird. Da aber in der Freistrahlturbine der Wasserstrahl zusätzlich umgelenkt wird, werden durch
diese Umlenkung dem Strahlstoß gleichgerichtete
Gravitationskräfte erschlossen. Es werden also durch
den unmittelbaren Strahlstoß etwa 50 % und durch die
Umlenkung und die damit verbundene Ausnutzung der
Gravitationskräfte weitere etwa 45 % der insgesamt
von der Turbine erzeugten nutzbaren Leistung zur
Verfügung gestellt.

Diese physikalische Größe der Strahlumlenkung
an der Turbine ermöglicht nachfolgende Definition,
die unter anderem bei rotierender Masse der Größe
"Zentrifugalkraft" entspricht und die physikalische
Gesetzmäßigkeit des Gravitationskräftemotors bestätigt.

Bei der Beschleunigung eines Teilchens wird
die gleiche Größe im Gravitationsfeld, die die Gewichtsmasse bewirkt, in Bewegung gesetzt, ohne bei
geradliniger Bewegung eines Teilchens direkt nutzbar in Erscheinung zu treten.

Der Erfindung liegt die Aufgabe zugrunde, einen
Motor zu schaffen, der die unveränderliche Energiequelle Gravitation nutzt und dadurch auch den Energiebedarf sichern kann, wenn andere Energiequellen
nicht vorhanden sind und insbesondere auch der vielseitig verwendbare Rohstoff Öl vor zu schneller

Ausbeutung geschützt und bewahrt werden soll.

Diese Aufgabe wird erfindungsgemäß durch einen Gravitationskräftemotor der eingangs genannten Art dadurch gelöst, daß der Rotationskörper die Form eines zylindrischen Hohlkörpers hat und zwei oder drei oder vier von innen nach außen spiralförmig um die Drehachse verlaufende Kanäle aufweist, daß die Flüssigkeit während der Rotation die Kanäle von innen nach außen kontinuierlich durchströmt und daß an den Kanalausgängen jeweils eine Düse angeordnet ist.

Während der Rotation erschließt hierbei die die Kanäle kontinuierlich durchströmende Flüssigkeit als Gewichtsmasse auf krummliniger Bewegungsrichtung die Gravitationskräfte in Form von Druck, der in mechanische Antriebsenergie umgesetzt wird. Der Hohlkörper muß zunächst durch einen Antrieb in Drehung versetzt werden, wobei ihm gleichzeitig Flüssigkeit zugeführt wird. Die Flüssigkeit wird vom Hohlkörpersystem auf die Eingangs- Umfangsgeschwindigkeit der Kanäle entsprechend beschleunigt. Die Kanäle übernehmen jetzt eine kontinuierliche Führung der Flüssigkeit. Der Hohlkörper kann an die Flüssigkeit nur die Energie abgeben, die bei dieser kontinuierlichen Zuströmgeschwindigkeit auf Rotationsendgeschwindigkeit (Umfangsgeschwindigkeit) erforderlich ist. Die Flüssigkeit erschließt auf der krummlinigen Bewegungsrichtung (Rotation) mit ihrer Gewichtsmasse die Gravitationskräfte als Druck entsprechend der Zentrifugalkraftgleichung. In den Kanälen baut sich von innen nach außen ein immer
stärker ansteigender Flüssigkeitsdruck auf. Diese
Druckenergie wird durch das Ausströmen der Flüssigkeit aus den Düsen in kinetische Strahlenergie
umgesetzt und bewirkt dabei ein Rückstoßdrehmoment.

Erfindungsgemäß ist es vorteilhaft, wenn der
Gravitationskräftemotor so ausgebildet ist, daß in
Strömungsrichtung gesehen, hinter den Düsen jeweils eine Umlenkeinrichtung am Rotationskörper angeordnet ist, mittels derer der Flüssigkeitsstrahl
in eine zur Drehrichtung entgegengesetzte Richtung
umgelenkt wird. Hierdurch ergibt sich eine wesentliche Steigerung der nutzbaren mechanischen Energie. Der Flüssigkeitsstrahlstoß bewirkt in der Umlenkvorrichtung in Drehrichtung ein Drehmoment und
erschließt durch die Umlenkung seiner Gewichtsmassen auf krummliniger Strömungsrichtung Kräfte aus
dem Gravitationsfeld, die dem Strahlstoß gleichgerichtet wirken und das Drehmoment erhöhen.

Die die Umlenkvorrichtung entgegen der Drehrichtung verlassende Flüssigkeit hat relativ zum
Motorgehäuse in Drehrichtung eine Restgeschwindigkeit, so daß ein Auffangen der Flüssigkeit in einem
Ringkanalsystem und eine Rückführung zum Hohlkörper
gewährleistet sind. Der zur Erschließung der Gravitationskräfte erforderliche Energieaufwand (es kann
mit einer zugeführten Energiemenge eine mehrfach
größere Energiemenge erschlossen werden) wird vom
Hohlkörper als nicht nutzbares Drehmoment zurückbehalten. An der Drehachse steht die wirklich nutzbare Leistung zur Verfügung.

- 5 -

Entsprechend einer vorteilhaften Ausgestaltung
der Erfindung ist der Gravitationskräftemotor so
ausgebildet, daß die physikalische Eigenschaft der
Flüssigkeit, die nur Druck und Massenkräfte, aber
keine Schubkräfte übertragen kann, es möglich macht,
daß Druckkanal, Düse und Umlenkeinrichtung auf einem
Bezugssystem liegen.

Damit der Flüssigkeitsdruck nicht aus kinetischer Beschleunigungsenergie entsteht, sondern aus
dem Gravitationskräften wirksam wird und nutzbar in
mechanische Energie umgesetzt werden kann, ist es
erfindungsgemäß vorteilhaft, wenn die spiralförmig
verlaufenden Kanäle mindestens eine Windung, vorzugsweise zwei Windungen haben und die Kanalbreite in axialer Richtung ein Mehrfaches der sich
in radialer Richtung erstreckenden Kanalhöhe betragen.
Es ist im übrigen auch denkbar, den Hohlkörper so
auszubilden, daß die Kanäle in radialer Höhe vom
Kanalanfang bis kurz vor die Düse unterteilt sind.
Damit ein laminarähnliches Strömungsverhalten der
Flüssigkeit erreicht wird, sollte die Kanallänge
zur radialen Kanalhöhe mindestens 50mal größer sein.

Um mit einem mittleren Gewichtsmassendurchsatz
durch den Hohlkörper die größte Energiemenge aus den
Gravitationskräften zu erschließen, ist es erfindungsgemäß zweckmäßig, den Düsenquerschnitt so zu
bemessen, daß die Durchsatzmenge je Sekunde etwa so
groß ist wie das Volumen des zugehörigen Kanals.

Die Düsen werden erfindungsgemäß als Flachdüsen
mit etwa rechteckförmigem Querschnitt ausgebildet,
um durch eine optimale Strahlumlenkung von 150$^{\mathrm{O}}$ die
größtmögliche Kraft, die dem Strahlstoß

gleichgerichtet wirkt, aus dem Gravitationsfeld
als Drehmoment zu erschließen.

Im allgemeinen wird es zweckmäßig sein, die
Drehzahl des Hohlkörpers zu regeln. Hierzu wird
erfindungsgemäß weiterhin vorgeschlagen, daß die
Drehzahl des Hohlkörpers durch Veränderung des
Düsenquerschnitts beeinflußbar ist, was einer
Leistungsregelung entspricht.

Erfindungsgemäß wird weiterhin vorgeschlagen,
daß der Hohlkörper in seinem Umfangsbereich von
einem die austretende Flüssigkeit aufnehmenden
Gehäuse umgeben ist, durch die die Flüssigkeit
zur Eintrittsseite des Hohlkörpers zurückgeführt
wird.

Weitere vorteilhafte Ausgestaltung der Erfindung und weitere mit der Erfindung verbundene Vorteile werden im Zusammenhang mit einem Ausführungsbeispiel genannt, das nachfolgend anhand einer
Zeichnung näher beschrieben wird. Im einzelnen
zeigen:

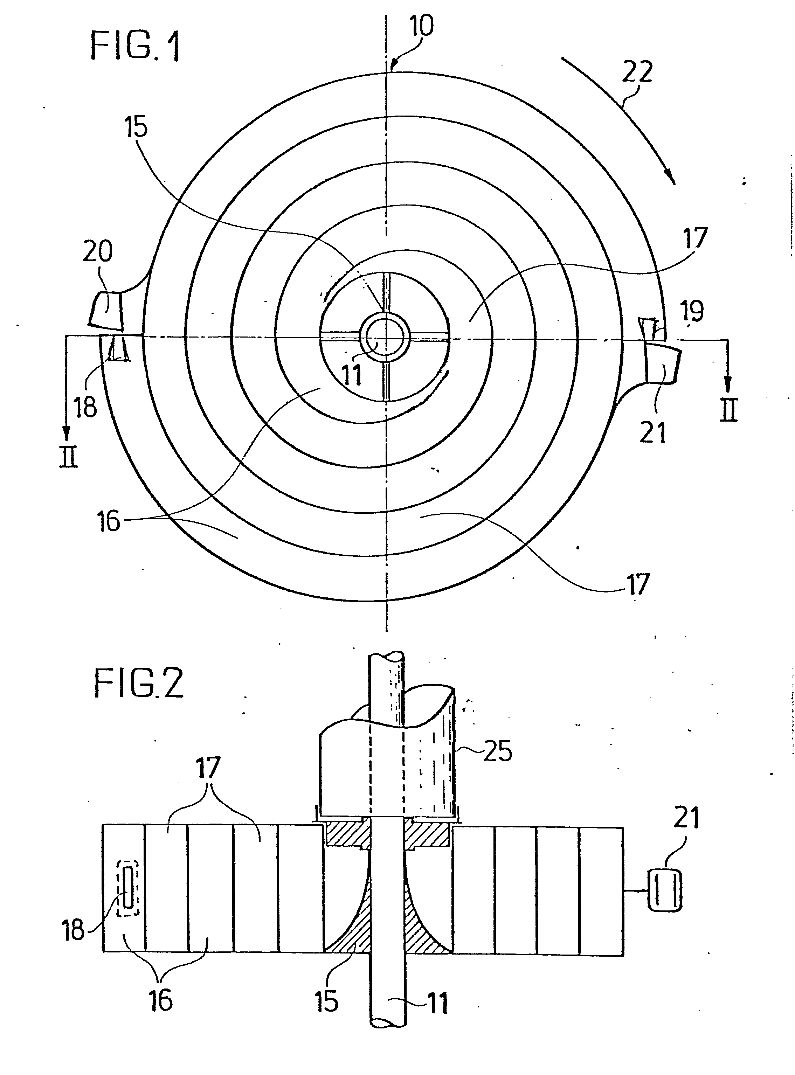

Fig. 1 in schematischer Darstellung einen Querschnitt durch den Hohlkörper ohne das umgebende Gehäuse;

Fig. 2 einen Vertikalschnitt durch die Darstellung nach Fig. 1;

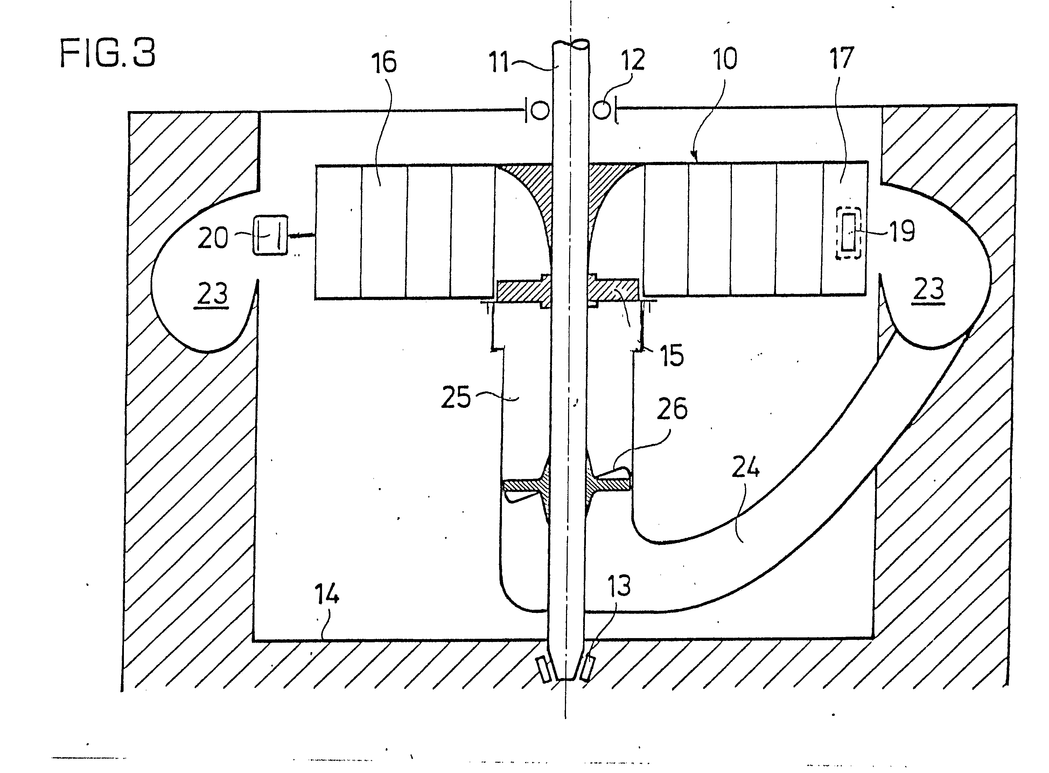

Fig. 3 in kleinerer Darstellung einen Vertikalschnitt durch den Hohlkörper einschließlich Gehäuse.

Ein zylindrischer, trommel- oder scheibenförmiger Hohlkörper 10 sitzt drehfest auf einer vertikal angeordneten Welle 11. Letztere ist mit Hilfe
von Wälzlagern 12 und 13 an einem Gehäuse 14 gelagert.

Der Hohlkörper 10 hat eine zu der einen Stirnseite hin offene Nabe 15, über die dem Hohlkörper
10 Flüssigkeit zugeführt wird. Von der Nabe 15
gehen zwei Kanäle 16 und 17 aus, die ineinandergreifend angeordnet sind und spiralförmig in jeweils etwa zwei Windungen nach außen um die Drehachse verlaufen. Die Kanäle 16 und 17 enden an
diametral gegenüberliegenden Stellen des Umfangs
in jeweils einer Flachdüse 18 bzw. 19, die gegenüber dem Kanalquerschnitt eine entsprechende Querschnittsverringerung darstellt. Die Mündung der
Flächendüsen 18 und 19 ist jeweils auf eine Umlenkeinrichtung 20 bzw. 21 gerichtet, die am Umfang des Hohlkörpers 10 befestigt ist. Der aus den
Flächendüsen 18 und 19 austretende Flüssigkeitsstrahl wird durch die Umlenkeinrichtung 20 und 21
in eine zu der Drehrichtung, die hier durch den
Pfeil 22 gekennzeichnet ist, entgegengesetzte Richtung umgelenkt.

Das Gehäuse 14 hat im Umfangsbereich des Hohlkörpers 10 und über den Umfang umlaufend einen Auffang-Ringkanal 23 für die aus den Kanälen 16 und
17 austretende Flüssigkeit. Der Auffang-Ringkanal
23 steht über eine Leitung 24 mit der Eingangsseite
eines Zuführungsrohres 25 in Verbindung. Im Bereich
des Letzteren ist auf die Welle 11 ein Propeller
26 drehfest aufgesetzt.

Das Zuführungsrohr 25 ist auf der Welle 11 im
Bereich des Wälzlagers 13 und an der Stirnseite des
Hohlkörpers 10 entsprechend abgedichtet.

Dem hier beschriebenen Gravitationskräftemotor
lag folgende Proportionierung der Abmessungen zugrunde:

- 8 -

Die Auslegungs-Umfangsgeschwindigkeit des Rotationskörpers, die größer als 100 m/sec. sein wird, ist eine konstante Größe, auf die sich Durchmesser und Drehzahl beziehen, weil die gewünschte Leistung von der strömenden Gewichtsmasse, die das Hohlkörpervolumen ergibt und als Düsendurchsatz in der Sekunde das Drehmoment bewirkt, abhängig ist. Der Außendurchmesser des Hohlkörpers beträgt etwa das Fünffache des im Bereich der Flüssigkeitszuführung vorhandenen Durchmessers, der gleichzeitig den Anfang der spiralförmig nach außen verlaufenden Kanäle darstellt. Die Kanalbreite in axialer Richtung liegt im Bereich des zwei- bis mehrfachen, der sich in radialer Richtung erstreckenden Kanalhöhe.

Durch die Erfindung wird die unveränderliche Energiequelle Gravitation nutzbar gemacht und ein von Energieträgern unabhängiger Antriebsmotor vorgeschlagen.

Um den Hohlkörper 10 auf eine ausreichend große Drehzahl zu bringen, wobei ihm gleichzeitig Flüssigkeit zugeführt wird, kann die Welle 11 mit einem hier nicht dargestellten Antrieb verbunden werden. Ab einer dem System eigenen Drehzahl, bei der die aus den Gravitationskräften erschlossene Energie die als Reibung verbrauchte Energie überwiegt, dreht der Hohlkörper 10 in den Enddrehzahlbereich, in welchen eine hier nicht dargestellte Düsendurchsatzregelung anspricht.

Die Flüssigkeit gelangt vom Auffangkanal 23 durch die Leitung 24 in das Zuführungsrohr 25, durch das die Achse 11 des Hohlkörpers 10 führt.

- 9 -

Auf dieser sitzt ein Propeller 26 drehfest, der die
Flüssigkeit in Richtung Hohlkörper 10 beschleunigt.
Die Flüssigkeit tritt durch die offene Stegnabe 15
in den Hohlkörper 10 ein. Die Nabe 15 dient außerdem noch zur Beschleunigung der Flüssigkeit auf
die Eingangsumfangsgeschwindigkeit. Die spiralförmig von innen nach außen in Drehrichtung verlaufenden Kanäle 16 und 17 übernehmen jetzt eine
kontinuierliche Führung der Flüssigkeit. Der Hohlkörper 10 kann an die Flüssigkeit nur die Energie
abgeben, die bei dieser kontinuierlichen Zuströmgeschwindigkeit auf die Rotationsendgeschwindigkeit (Umfangsgeschwindigkeit) erforderlich ist.
Dieser Beschleunigungsenergieaufwand wird kleiner
sein, als der der Coriolis-Gleichung, weil die
kinetische Rotationsenergie der Flüssigkeit im
Hohlkörper 10 weitgehend erhalten bleibt. Durch
die Rotationsgeschwindigkeit der strömenden Gewichtsmasse (Flüssigkeit) im Hohlkörper 10 werden
die Gravitationskräfte entsprechend der Zentrifugalkraftgleichung in Form von Druck wirksam. In
den Kanälen 16 und 17 baut sich von innen nach
außen ein immer stärker ansteigender Flüssigkeitsdruck auf. Diese Druckenergie wird durch das Ausströmen der Flüssigkeit aus den Düsen 18 und 19 in
kinetische Strahlenergie umgesetzt.

Der Flüssigkeitsstrahl, der die Düsen in Drehrichtung oder in einer zur Drehrichtung entgegengesetzten Richtung verläßt, erreicht jeweils etwa die gleiche Geschwindigkeit und ist kleiner als die
Umfangsgeschwindigkeit des Hohlkörpers, da der
Flüssigkeitsdruck jeweils durch die Rotationsgeschwindigkeit aus der Gravitation wirksam wird.
Die kinetische Strahlenergie muß bei optimaler Auslegungsgröße des Hohlkörpersystems nach dem physikalischen Gesetz der Energieerhaltung nach den beiden angeführten Strahl-Drehrichtungen ungefähr die
gleiche Leistung erbringen. Diese Aussage ist durch
die physikalische Eigenschaft der Flüssigkeit, die
nur Druck und Massenkräfte, aber keine Schubkräfte
übertragen kann, begründet. Der Flüssigkeitsstrahlausstoß in einer zur Drehrichtung entgegengesetzten
Richtung kann demnach nur mit etwa der halben Größe
(halbe Strahlimpulsgröße entspricht der Druckkraft
der Düsenfläche) ein Drehmoment bewirken. Dem
Strahlstoß der in Drehrichtung in der Umlenkvorrichtung ein Drehmoment erzeugt, wirkt nur die o.g.
Strahlimpulsgröße entgegen.

Der Flüssigkeitsstrahl bewirkt in der Umlenkvorrichtung 2o und 21 als Strahlstoß in Drehrichtung ein Drehmoment und erschließt durch die Umlenkung seiner Gewichtsmasse Gravitationskräfte,
die dem Strahlstoß gleichgerichtet wirken und das
Drehmoment erhöhen.

Die dem Hohlkörper 10 nach Drehmomenterzeugung
verlassende Flüssigkeit hat eine Restgeschwindigkeit in Drehrichtung, so daß ein Auffangen der
Flüssigkeit in einem Auffang-Ringkanalsystem 23
und eine Rückführung zum Hohlkörper 10 gewährleistet sind.

Der Hohlkörper 10 behält den Energieaufwand
zur Erschließung der Gravitationskräfte als nicht
nutzbares Drehmoment zurück. An der Drehachse 11
steht die nutzbare Leistung zur Verfügung.

Bei dem Versuchs-Gravitationskräftemotor
wurde Wasser als strömende Gewichtsmasse verwendet. Es ist denkbar, daß auch andere Flüssigkeiten, die ähnliche oder bessere Eigenschaften als
Wasser aufweisen, zur Anwendung kommen.

Pröschel , Erich
in 4000 Düsseldorf

Patentansprüche

1. Gravitationskräftemotor mit einem Rotations-körper der unter Verwendung einer strömenden Gewichtsmasse auf krummliniger Bewegungs- und Strömungsrichtung die Gravitationskräfte zu einer nutzbaren mechanischen Energie erschließt, dadurch gekennzeichnet, daß der Rotationskörper die Form eines zylindrischen Hohlkörpers (10) hat und zwei oder drei oder vier von innen nach außen spiralförmig um die Drehachse verlaufende Kanäle (16, 17) aufweist, daß die Flüssigkeit während der Rotation die Kanäle (16, 17) von innen nach außen kontinuierlich durchströmt und daß an den Kanalausgängen jeweils eine Düse (18, 19) angeordnet ist.

2. Gravitationskräftemotor nach Anspruch 1, dadurch gekennzeichnet, daß in Strömungsrichtung gesehen hinter den Düsen (18, 19) jeweils eine Umlenkeinrichtung (20, 21) am Rotationskörper angeordnet ist, mittels derer der Flüssigkeitsstrahl in eine zur Drehrichtung entgegengesetzte Richtung umgelenkt wird.

3. Gravitationskräftemotor nach Anspruch 1 oder 2, dadurch gekennzeichnet, daß die spiralförmig verlaufenden Kanäle (16, 17) mindestens eine Windung, vorzugsweise zwei Windungen haben, und daß die Kanalbreite in axialer Richtung ein Mehrfaches der sich in radialer Richtung erstreckenden Kanalhöhe beträgt.

4. Gravitationskräftemotor nach einem der vorherigen Ansprüche, dadurch gekennzeichnet, daß die Düsen jeweils als Flachdüsen (18, 19) mit etwa rechteckförmigem Querschnitt ausgebildet sind und daß der Düsenquerschnitt so bemessen ist, daß die Durchsatzmenge je Sekunde etwa so groß ist wie das Volumen des zugehörigen Kanals (16, 17).

5. Gravitationskräftemotor nach einem der Ansprüche 2 bis 4, dadurch gekennzeichnet, daß die Umlenkeinrichtung (20, 21) für die Flachdüsen (18, 19) jeweils durch einen sich über einen Winkelbereich von mindestens 150° erstreckenden gebogenen Endteil des Kanals gebildet ist.

6. Gravitationskräftemotor nach einem der vorherigen Ansprüche, dadurch gekennzeichnet, daß der Hohlkörper (10) in seinem Umfangsbereich von einem die austretende Flüssigkeit aufnehmenden Gehäuse (14) umgeben ist und daß das Gehäuse (14) Bestandteil eines Leitungssystems (23, 24) ist, durch das die Flüssigkeit zur Eintrittsseite des Hohlkörpers (10) zurückgeführt wird.

- 3 -

7. Gravitationskräftemotor nach einem der vorherigen Ansprüche, dadurch gekennzeichnet, daß die Drehzahl des Hohlkörpers (10) durch Veränderung des Düsenaustrittsquerschnitts beeinflussbar ist.

8. Gravitationskräftemotor nach einem der vorherigen Ansprüche, dadurch gekennzeichnet, daß der Hohlkörper (10) die Form einer Scheibe oder Trommel hat.

9. Gravitationskräftemotor nach einem der vorherigen Ansprüche, dadurch gekennzeichnet, daß die Rotationsachse (11) senkrecht angeordnet ist.

10. Gravitationskräftemotor nach einem der vorherigen Ansprüche, dadurch gekennzeichnet, daß an einer Stirnseite des Hohlkörpers (10) ein gegenüber diesem abgedichtetes, feststehendes Zuführungsrohr (25) angeordnet ist.

FIG.1

FIG.2

FIG.3

2/2

0042453

Europäisches
Patentamt

**0042453**

Nummer der Anmeldung

**EUROPÄISCHER RECHERCHENBERICHT**

EP 80 10 3564

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | F 03 B 17/00<br>F 03 G 3/00 |
| | US - A - 2 596 276 (NAPOLI)<br>* Spalte 1, Zeilen 1-10, 44-62; Spalte 2, Zeilen 1-10, 26-61; Figuren 1,2 * | 1 | |
| | FR - A - 426 965 (CHENARD)<br>* Seite 1, Zeilen 1-10; Seite 4, Zeilen 6-19, 35-40 * | 1 | |
| | FR - A - 1 025 963 (LEMONNIER)<br>* Seite 1, linke Spalte, letzter Absatz; rechte Spalte, Absätze 1,2 * | 1 | RECHERCHIERTE SACHGEBIETE (Int. Cl.³)<br><br>F 03 G<br>F 03 B |
| | GB - A - 655 897 (PATAY)<br>* Seite 2, Zeilen 8-25, 111-130; Seite 3, Zeilen 1-5 * | 1 | |
| | BE - A - 696 864 (GENET)<br>* Seite 4, 3 letzte Absätze; Seite 5 ganz; Seite 6, Absatz 1 * | 1,9,10 | |
| | BE - A - 367 583 (GENET)<br>* Seite 4, letzter Absatz; Seite 5, Absätze 1-3; Seite 10, Zeilen 13,14; Seite 17, Zeilen 24-29; Figuren 2-5,8 * | 1,9,10 | |
| A | BE - A - 385 221 (EDELINE)<br>./. | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | Der vorliegende Recherchenbericht wurde für alle Patentansprüche erstellt. |
|---|---|

| Recherchenort | Abschlußdatum der Recherche | Prüfer |
|---|---|---|
| Den Haag | 20-02-1981 | JORIS |

EPA form 1503.1  06.78

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | * Seite 1, Absatz 1; Seite 7, Absätze 3-6; Seite 8, Absätze 1-3 * <br><br> -- | | |
| A | FR - A - 1 526 052 (GOYET) <br> * Seite 1, linke Spalte ganz; rechte Spalte, Absatz 1; Seite 3, rechte Spalte, letzte 3 Absätze; Seite 4, linke Spalte ganz * <br><br> -- | 1 | |
| | | | RECHERCHIERTE SACHGEBIETE (Int. Cl.³) |
| A | FR - A - 1 212 166 (EVRARD) <br> * Seite 1, linke Spalte, Absatz 5; rechte Spalte, letzter Absatz; Seite 2, linke Spalte, Absätze 1-3 * <br><br> ---- | 1 | |

EPA Form 1503.2   06.78